Europäisches Patentamt

(19) European Patent Office

Office européen des brevets

(11) Veröffentlichungsnummer: **0 032 662**
A1

(12) **EUROPÄISCHE PATENTANMELDUNG**

(21) Anmeldenummer: 81100038.9

(22) Anmeldetag: 07.01.81

(51) Int. Cl.³: **C 10 B 31/04**, B 65 G 65/46

(30) Priorität: **22.01.80 DE 3002132**

(43) Veröffentlichungstag der Anmeldung: **29.07.81 Patentblatt 81/30**

(84) Benannte Vertragsstaaten: **BE FR GB IT NL**

(71) Anmelder: **Dr. C. Otto & Comp. Gesellschaft mit beschränkter Haftung, Christstrasse 9, D-4630 Bochum 1 (DE)**

(72) Erfinder: **Wackerbarth, Folkard, Dipl.-Ing., Saladin-Schmitt-Strasse 30, D-4630 Bochum 1 (DE)**
Erfinder: **Kwasnik, Hans-Jürgen, An der Ziegelei 40, D-4690 Herne 2 (DE)**
Erfinder: **Piduch, Hans-Günter, Dürerstrasse 30, D-4630 Bochum 1 (DE)**

(74) Vertreter: **Radt, Finkener, Ernestl Patentanwälte, Heinrich-König-strasse 119, D-4630 Bochum 1 (DE)**

(54) **Waagerechte Förderrinne, insbesondere für Beschickungswagen von Verkokungsöfen.**

(57) Die Erfindung betrifft eine waagerechte Förderrinne (17), in die eine Schnecke eingebaut ist, die die am einen Ende der Förderrinne aufgegebene Kohle zu einem am anderen Ende befindlichen senkrechten Auslass fördert. Die Förderrinne ist besonders geeignet, um bei auf der Decke von Verkokungsöfen verfahrbaren Beschickungswagen die aus den Behältern des Wagens absinkende Kohle in Teleskoprohre zu fördern, die über den Füllöchern der Ofenkammern auf der Ofendecke aufgesetzt werden.

Um eine Klumpenbildung der Kohle in den ausserhalb der Wendel der Förderschnecke liegenden Räumen zu vermeiden, ist an der Einlassöffnung der Rinne eine die Wendel der Schnecke umgebende Blende (25) eingebaut. Oberhalb des Auslasses der Rinne kann ein zur Förderrichtung schrägstehender Leitflügel (26) vorgesehen sein, durch den an der Wandung der Rinne etwa noch haftende Kohle abgeschabt wird. Der Boden der Rinne, der sich der Form der Wendel anschmiegt, kann nach dem Auslass zu schräg abfallen.

0032662

Waagerechte Förderrinne, insbesondere für Beschickungswagen von Verkokungsöfen

Gegenstand der Erfindung ist eine waagerechte Förderrinne
mit eingebauter Schnecke und am Ende liegendem senkrechten Auslaß, insbesondere eine Füllrinne für Kohle bei Beschickungswagen von Verkokungsöfen.

Bei waagerechten Förderrinnen mit eingebauter Schnecke
kommt es besonders bei der Förderung feuchter Kohle zu
einer Klumpenbildung des von der Schnecke mitgerissenen,
außerhalb der Wendel in der Rinne liegenden Fördergutes.
Das führt zu einem ungleichmäßigen Austrag des Gutes durch
den senkrechten Auslaß. Besonders beim Füllen von Verkokungsöfen durch auf der Decke der Öfen fahrende Beschikkungswagen ergeben sich dadurch Unzuträglichkeiten. Die
Zeitdauer der Füllung durch eine zu einem Fülloch einer
Ofenkammer führende Rinne und damit die Menge der zugeführten Kohle wird vielfach durch Einstellen einer bestimmten Anzahl von Umdrehungen der Förderschnecke festgelegt; eine solche Einstellung ist natürlich nur dann
brauchbar, wenn in der Zeiteinheit immer die genau gleiche
Gutmenge von der Schnecke über den Auslaß ausgetragen
wird.

Es ist das Ziel der Erfindung, ein solches Arbeiten einer
Förderrinne sicherzustellen. Gemäß der Erfindung ist in
der Förderrinne, in der Förderrichtung der Schnecke gesehen, am Ende der Einlaßöffnung eine Blende eingebaut,
die die Wendel der Schnecke umgibt. Dadurch wird verhindert, daß von der Wendel die nahe derselben in der Rinne
liegende Kohle mitgenommen wird und Gelegenheit hat, sich
am Auslaß aufzustauen und Klumpen zu bilden oder Verstopfungen herbeizuführen, die das Austragen der Kohle beeinträchtigen und ungleichmäßig gestalten.

Im Zusammenhang damit kann gemäß der weiteren Erfindung oberhalb des Auslasses an dem wendelfreien Teil der Schnekkenwelle ein als Schaber wirkender Leitflügel angebracht sein, der schräg zur Förderrichtung der Schnecke so gestellt ist, daß er die an den Wandungen der Rinne etwa noch haftende Kohle abstreift und so über dem senkrechten Auslaß eine Entspannungszone schafft.

Der Boden der Förderrinne hat einen der Form der Wendel angepaßten halbkreisförmigen, U-förmigen oder V-förmigen Querschnitt. Um das Fördergut beim Übergang von der waagerechten Förderung in den senkrechten Fall zu entspannen, kann der Boden am Ende der Rinne nach unten abgeschrägt sein, wodurch ein gleichmäßiges Fließen des Gutes in senkrechter Richtung eingeleitet wird.

Die neue Gestaltung der Rinne hat im praktischen Betrieb zu einer einwandfreien und in kurzen Zeiträumen durchzuführenden gleichmäßigen Beschickung der Kammern von Verkokungsöfen durch auf der Ofendecke fahrende Füllwagen geführt und erlaubt, eine größere Anzahl von Ofenfüllungen in der Stunde vorzunehmen.

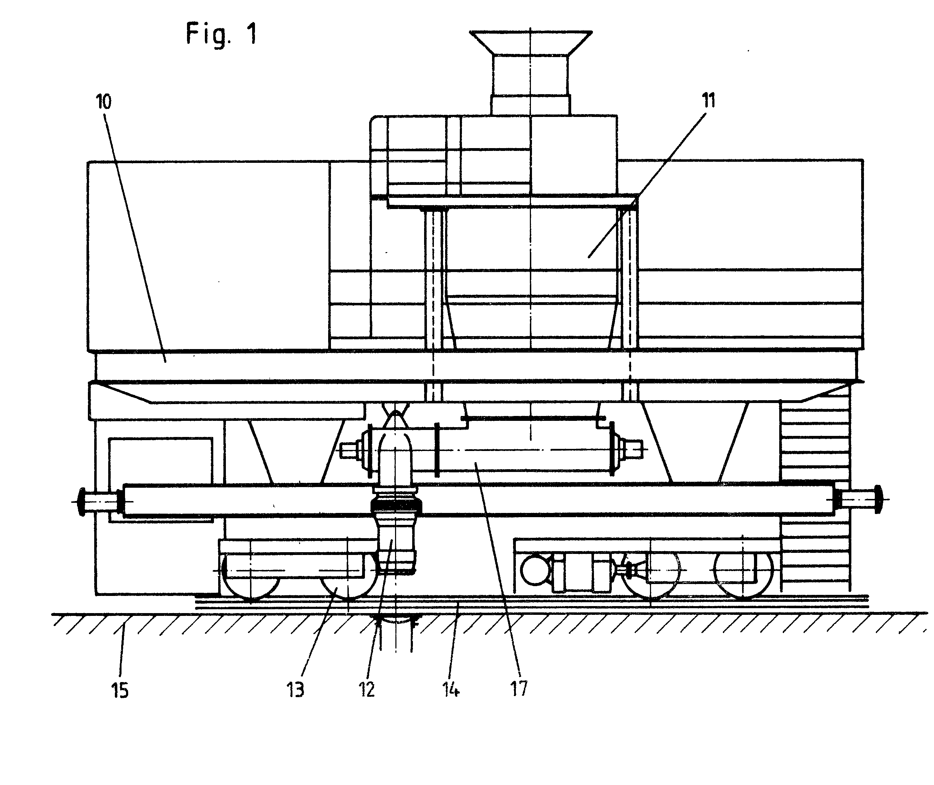

Auf den anliegenden Zeichnungen stellt Figur 1 die Ansicht eines auf der Decke einer Batterie von Verkokungsöfen fahrenden Füllwagens dar.

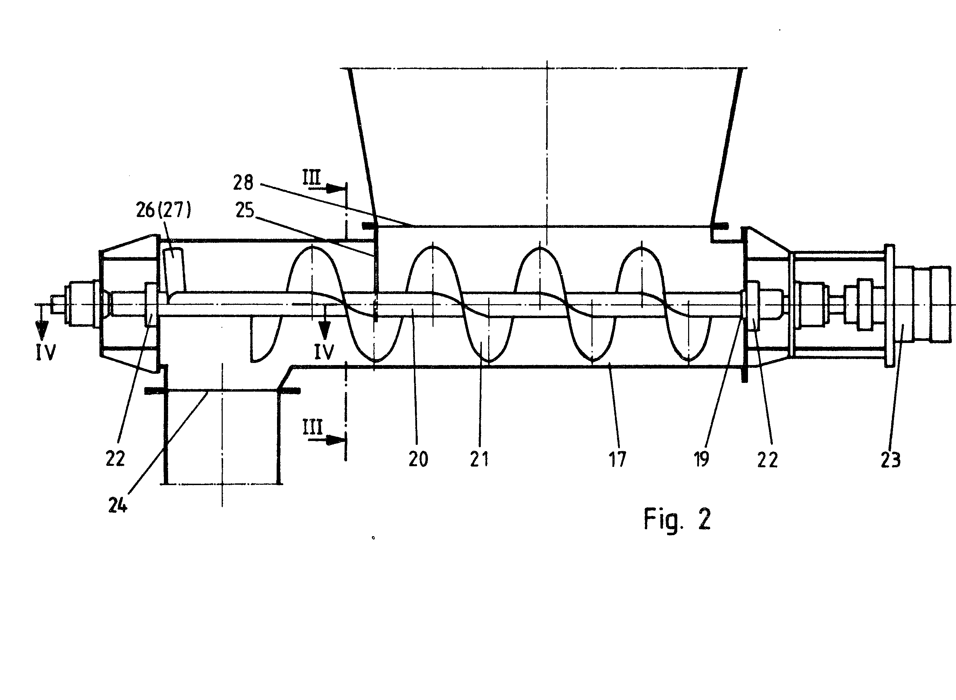

Figur 2 zeigt im größeren Maßstabe als Ausschnitt aus Figur 1 die Förderrinne, die das von einem Behälter absinkende Fördergut zu einem Auslaß fördert, von dem es über das absenkbare Füllrohr in den die Ofendecke durchsetzenden Füllschacht absinkt.

Figur 3 ist eine Ansicht der in die Förderrinne eingebauten Blende gemäß der Schnittlinie III-III von Figur 2.

Figuren 4a und 4b stellen Draufsichten auf das Endstück der Förderschnecke gemäß der Schnittlinie IV-IV von Figur 2 dar, dabei handelt es sich bei Figur 4a um eine rechtsgängige Schnecke, bei Figur 4b um eine linksgängige Schnecke.

Mit 10 ist der auf der Ofendecke 15 fahrende Füllwagen bezeichnet. Die Räder 13 desselben fahren auf Schienen 14. 11 sind die mit Kohle gefüllten Behälter, 12 die auf die Ofendecke absenkbaren Teleskoprohre.

Durch die untere Einlaßöffnung 28 wird die Kohle aus dem Behälter 11 in die Förderrinne 17 ausgetragen, deren Boden einen halbkreisförmigen Querschnitt hat und deren Wände schräg ansteigen. Innerhalb der Förderrinne 17 lagert die Schnecke 19 mit der Wendel 21 und der Welle 20, die an beiden Enden auf Lagern 22 ruht. Sie wird von einem Antrieb 23 in Umdrehung versetzt.

24 ist der zu dem Teleskoprohr 12 führende Auslaß.

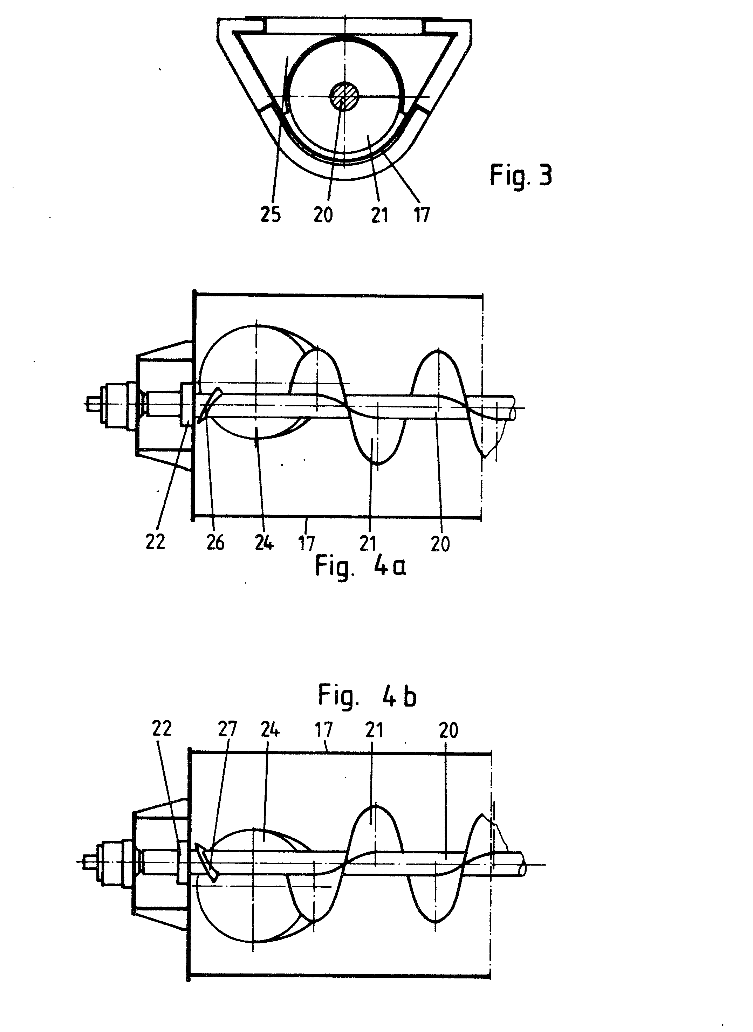

Figur 3 zeigt die die Wendel 21 umgebende Blende 25.

26 ist der oberhalb des Auslasses 24 an dem wendelfreien Abschnitt der Schneckenwelle 20 befestigte Leitflügel bei einer rechtsgängigen Schnecke, 27 der Leitflügel bei einer linksgängigen Schnecke.

Wird die Schnecke in Umdrehung versetzt, so wird die aus dem Behälter 11 absinkende Kohle in Richtung auf den Auslaß zu bewegt und gleichmäßig durch den Auslaß 24 ausgetragen.

**Radt, Finkener, Ernesti**
Patentanwälte
Heinrich-König-Straße 119
4630 Bochum
Fernsprecher (0234) 477 27 / 28
Telegrammadresse: Radtpatent Bochum

WPR/HH

## Ansprüche

1. Waagerechte Förderrinne mit eingebauter Schnecke und einem am Ende liegenden senkrechten Auslaß, insbesondere Füllrinne für Kohle bei Beschickungswagen von Verkokungsöfen, gekennzeichnet durch eine, in Förderrichtung der Schnecke (19) gesehen, am Ende der Einlaßöffnung (28) in die Rinne 17 eingebaute, die Wendel (21) der Schnecke (19) umgebende Blende (25).

2. Waagerechte Förderrinne nach Anspruch 1, gekennzeichnet durch einen oberhalb des Auslasses (24) an dem wendelfreien Teil der Schneckenwelle (20) befestigten zur Förderrichtung schräg stehenden Leitflügel (26, 27) zum Abschaben an der Wandung der Förderrinne (17) noch haftender Kohle.

3. Waagerechte Förderrinne nach Anspruch 1 oder 2, dadurch gekennzeichnet, daß der der Form der Wendel (21) sich anschmiegende Boden (18) der Rinne (17) nach dem Auslaß (24) zu schräg abfällt.

Fig. 1

Fig. 2

0032662

Fig. 3

25  20  21  17

22  26  24  17  21  20

Fig. 4a

Fig. 4b

22  27  24  17  21  20

Europäisches Patentamt

**EUROPÄISCHER RECHERCHENBERICHT**

003 2662

EP 81 10 0038

| Kategorie | Kennzeichnung des Dokuments mit Angabe, soweit erforderlich, der maßgeblichen Teile | betrifft Anspruch |
|---|---|---|
| | US - A - 2 516 770 (HANNA) <br> * Spalte 2, Zeilen 41-47; Figuren 1-3 * | 1 |
| | -- | |
| | FR - A - 2 039 458 (CANTENOT) <br> * Ansprüche 1,3; Figuren 1,2 * | 1 |
| | -- | |
| | FR - A - 2 355 747 (FINOT) <br> * Figur 1 * | 2 |
| | -- | |
| | DE - C - 470 764 (VESUVIO) <br> * Ansprüche 1,2; Abbildung 1 * | 2 |
| | -- | |
| | DE - C - 921 769 (MARTIN) <br> * Anspruch 1; Figur 2 * | 2 |
| | -- | |
| | DE - C - 489 449 (OTTO & COMP.) <br> * Figur 2 * | 3 |
| | ---- | |

**EINSCHLÄGIGE DOKUMENTE**

KLASSIFIKATION DER ANMELDUNG (Int. Cl.)

C 10 B 31/04
B 65 G 65/46

RECHERCHIERTE SACHGEBIETE (Int. Cl.)

C 10 B 31/04
B 65 G 65/46
F 23 K 3/16

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-04-1981 | MEERTENS |

EPA form 1503.1 06.78